Europäisches Patentamt

European Patent Office

Office européen des brevets

(19)

(11) Veröffentlichungsnummer: **0 387 221**
**A1**

(12) # EUROPÄISCHE PATENTANMELDUNG

(21) Anmeldenummer: **90850085.3**

(22) Anmeldetag: **01.03.90**

(51) Int. Cl.⁵: **B23K 9/26**

(30) Priorität: **07.03.89 SE 8900781**

(43) Veröffentlichungstag der Anmeldung:
**12.09.90 Patentblatt 90/37**

(84) Benannte Vertragsstaaten:
**AT BE CH DK FR LI NL**

(71) Anmelder: **ESAB Aktiebolag**
**Box 8004 Herkulesgatan 72**
**S-402 77 Göteborg(SE)**

(72) Erfinder: **Karlsten, Karl-Ola**
**Stenstugevägen 6**
**S-702 29 Örebro(SE)**
Erfinder: **Larsson, Bertil**
**Arvid Rödingsväg 3**
**S-695 00 Laxä(SE)**

(74) Vertreter: **Frisch, Kurt**
**c/o ESAB AB Box 8004**
**S-402 77 Göteborg(SE)**

(54) **Kontaktmundstück.**

(57) Ein Kontaktmundstück für eine drahtförmige Schweißelektrode für das Lichtbogenschweißen ist im vorderen Teil als Kontaktrohr (3) und im hinteren Teil als Führungskanal für die Elektrode ausgebildet. Der Führungskanal wird durch eine im Mundstückkörper ausgenommene offene Nut (5) gebildet. Der Vorschub durch die Elektrode (6) wird durch einen konvexen Vorsprung (7) der Nutenwand in die geradlinige Vorschubrichtung behindert. Mit der Elektrode ins Mundstück eingeschleppte Teilchen fallen aus der offenen Nut (5) heraus und können daher das Kontaktrohr (3) nicht verlegen.

*Fig. 1*

EP 0 387 221 A1

## Kontaktmundstück

Die Erfindung betrifft ein Kontaktmundstück für eine drahtförmige Schweißelektrode, dessen vorderer Teil als Kontaktrohr und dessen rückwärtiger Teil als Führungskanal ausgebildet ist, wobei die Kanalwandungen zumindest einen Vorsprung aufweisen, der ein Hindernis für einen geradlinigen Vorschub der Elektrode durch das Kontaktmundstück ausmacht.

Mundstücke dieser Art werden z.B. für Schweißbrenner und Schweißpistolen verwendet. Zur drahtförmigen Schweißelektroden, die im wesentlichen kontinuierlich von einer Spule abgewikkelt und durch das Mundstück vorgeschoben wird, wird im Mundstück der Schweißstrom überführt. Es ist daher von großer Bedeutung, daß zwischen Elektrodendraht und Mundstück stets ein sehr guter Kontakt vorhanden ist. Außerdem ist es beim Schweißen wünschenswert, daß die Lage der Kontaktpunkte mit der Elektrode im Mundstück unverändert bleiben und stets eine im wesentlichen gleiche Elektrodenlänge zwischen Mundstück und Elektrodenspitze vom Schweißstrom durchflossen wird.

Bei schlechtem Kontakt zwischen Mundstück und Elektrode tritt Funkenerosion auf, die sich auf die Lebensdauer des Mundstückes nachteilig auswirkt. Die Funkenbildung verursacht auch wegen des höheren Spannungsfalles eine stärkere Erwärmung des Mundstückes, was ebenfalls unvorteilhaft ist.

Ein Kontaktmundstück der oben beschriebenen Gattung ist durch GB 2 074 069 bekannt geworden. In einem Teil des bekannten Mundstückes wird die Elektrode durch Vorsprünge in der Mundstückwandung aus dem geradlinigen Vorschubweg gedrängt und dabei zu genau definierten Kontakten zwischen Mundstückwandung und Elektrode gezwungen.

Das bekannte Mundstück ist im wesentlichen rohrförmig und es besteht die Gefahr, daß sich von der Elektrode mitgeschleppte Teilchen bei den durch die Vorsprünge verursachten Kanalverengungen ansammeln und zu Verstopfungen im Mundstück führen, durch die der Vorschub der Elektrode unkontrollierbar abgebremst wird.

Die Erfindung hat sich zur Aufgabe gestellt ein Mundstück zu schaffen, daß diesen Nachteil nicht aufweist und zudem sehr preisgünstig hergestellt werden kann. Die Erfindung zeichnet sich dadurch aus, daß der Führungskanal zumindest teilweise eine im Mundstück ausgenommene Nut ist, wobei der Vorsprung durch eine konvexe Fläche der Nutenwandung gebildet wird. Von der Elektrode ins Mundstück eingebrachte Teilchen fallen aus der offenen Nut heraus und können keine Störungen des Vorschubs der Elektrode verursachen.

Gemäß einer vorteilhaften Ausführungsform der Erfindung ist das hintere Ende des Führungskanals als ein mit dem Kontaktrohr koaxiales Rohr ausgebildet. Dadurch wird das Einführen der Elektrode in das Mundstück erleichtert.

Weitere vorteilhafte Ausgestaltungen der Erfindung werden im Zusammenhang mit der beigefügten Zeichnung erläutert, die ein Ausführungsbeispiel der Erfindung zeigt.

Fig. 1 ist eine Draufsicht auf ein Kontaktmundstück und

Fig. 2 ist ein Schnitt längs II-II in Fig. 1.

Fig. 3 ist ein Schnitt längs III-III in Fig. 2.

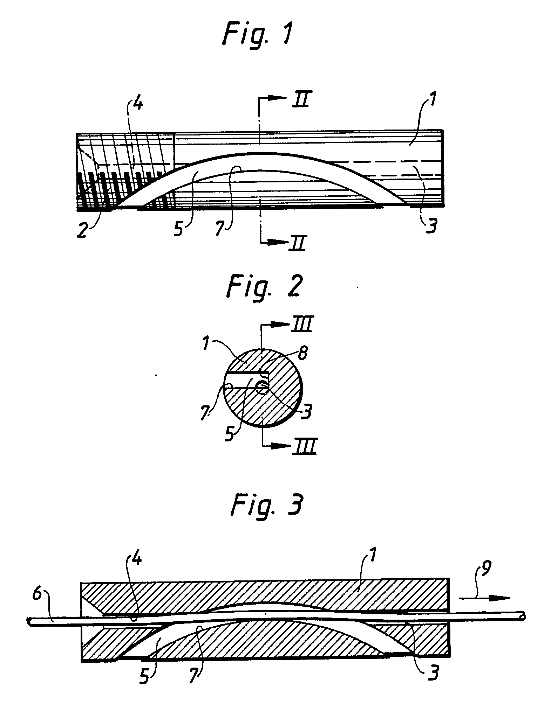

Das Kontaktmundstück hat die Form einer zylindrischen, metallischen Stange 1, die vorzugsweise aus Kupfer oder einer Kupferlegierung besteht. Am hinteren Ende der Stange ist ein Gewinde vorgesehen mit dem das Mundstück beispielsweise auf bekannte Weise in einen Elektrodenleiter einer Schweißpistole einschraubbar ist. Die Stange 1 ist an beiden Enden mit zylindrischen Bohrungen 3, 4 versehen. Der Durchmesser der Bohrung 3 ist geringfügig größer als der Elektrodendiameter, während der Durchmesser der Bohrung 4 noch etwas größer ist. In der Stange ist außerdem eine Nut 5 mit kreisbogenförmigen Verlauf eingefräst, die einen rechteckigen Querschnitt besitzt. Die Achse des Kreisbogens steht senkrecht zur Achse des Mundstückes. Im Schnittbild Fig. 3 ist zusätzlich eine Drahtelektrode 6 dargestellt. Die Vorschubrichtung der Elektrode durch das Mundstück ist mit einem Pfeil 9 angegeben. Die Drahtelektrode 6, die durch die als Führungsrohr dienende Bohrung 4 in geradliniger Richtung zur koaxialen, als Kontaktrohr dienenden Bohrung 3 eingeführt wird, wird durch die konvex gewölbte Nutenseitenwand 7 aus dieser geradlinigen Vorschubrichtung abgelenkt und dann im Kontaktrohr 3 wieder in die ursprüngliche Richtung zurückgeführt. Durch die mehrfache Ablenkung der Elektrode im Mundstück werden eindeutige Kontaktstellen zwischen dem Elektrodendraht und dem Mundstück geschaffen, deren Lage sich auch nach längerer Benutzung des Mundstückes nicht ändert. Von der Elektrode im Mundstück mitgeschleppte Teilchen können sich in der offenen Nut nicht ansammeln und behindern daher nicht den Vorschub der Elektrode durch das Mundstück. Um eine gute Führung der Elektrode im Bereich der Nut 5 zu erreichen, ist der ebene Nutengrund 8 als Tangentialfläche der Bohrung 3 ausgebildet.

Das Mundstück läßt sich einfach und billig aus einem Stangenstück beispielsweise durch Bohren der beiden kurzen Bohrungen 3, 4 und Fräsen der kreisbogenförmigen Nut 5 herstellen. Die konvexe in die geradlinige Vorschubrichtung der Elektrode vorspringende Wölbung der Nutenwandung kann auf vielerlei Art gestaltet werden. Aus herstellungstechnischen Gründen erwies sich die kreisbogenförmige Nut als besonders vorteilhaft.

**Ansprüche**

1) Kontaktmundstück für eine drahtförmige Schweißelektrode für das Lichtbogenschweißen, dessen vorderer Teil als Kontaktrohr (3) und dessen rückwärtiger Teil als Führungskanal ausgebildet ist, wobei die Kanalwandungen zumindest einen Vorsprung aufweisen, der ein Hindernis für einen geradlinigen Vorschub der Elektrode (6) durch das Kontaktmundstück ausmacht, dadurch gekennzeichnet, daß der Führungskanal zumindest teilweise eine im Mundstück ausgenommene Nut (5) ist, wobei der Vorsprung durch eine konvexe Fläche (7) der Nutwandungen gebildet wird.

2) Kontaktmundstück nach Patentanspruch 1, dadurch gekennzeichnet, daß das hintere Ende des Führungskanals als ein mit dem Kontaktrohr (3) koaxiales Führungsrohr (4) ausgebildet ist.

3) Kontaktmundstück nach Patentanspruch 1 oder 2, dadurch gekennzeichnet, daß der Nutengrund (8) eine Tangentialebene des Kontaktrohres (3) ist.

4) Kontaktmundstück nach einem der Patentansprüche 1 bis 3, dadurch gekennzeichnet, daß der Verlauf der Nut (5) im Kontaktmundstück die Form eines Kreisbogens hat, dessen Achse senkrecht zur Achse des Kontaktrohres (3) steht.

5) Kontaktmundstück nach einem der Patentansprüche 1 bis 4, dadurch gekennzeichnet, daß die Nut (5) einen rechteckigen Querschnitt besitzt.

*Fig. 1*

*Fig. 2*

*Fig. 3*

# EUROPÄISCHER RECHERCHENBERICHT

Europäisches Patentamt

Nummer der Anmeldung

EP 90 85 0085

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y,D | GB-A-2074069 (ESAB LIMITED) <br> * das ganze Dokument * <br> --- | 1-5 | B23K9/26 |
| Y | GB-A-425155 (THE BRITISH THOMSON-HUSTON COMPANY, LIMITED) <br> * das ganze Dokument * <br> ----- | 1-5 | |

RECHERCHIERTE SACHGEBIETE (Int. Cl.5 )

B23K

Der vorliegende Recherchenbericht wurde für alle Patentansprüche erstellt

| Recherchenort | Abschlußdatum der Recherche | Prüfer |
|---|---|---|
| DEN HAAG | 15 JUNI 1990 | ARAN D.D. |